# EUROPÄISCHE PATENTSCHRIFT

(11) **EP 3 746 487 B1**
(45) Veröffentlichungstag und Bekanntmachung des Hinweises auf die Patenterteilung: **12.03.2025**
(21) Anmeldenummer: 19702077.9
(22) Anmeldetag: 28.01.2019
(51) Int. Cl.: C08B 31/00, C09J 103/00

(54) **KLEBSTOFF UND VERFAHREN ZU SEINER TROCKNUNG UND/ODER AUSHÄRTUNG**
ADHESIVE AND METHOD FOR ITS DRYING AND / OR CURING
ADHÉSIF ET PROCÉDÉ DE SÉCHAGE ET / OU DE DURCISSEMENT

(30) Priorität: 31.01.2018 DE 102018102114
(43) Veröffentlichungstag der Anmeldung: 09.12.2020
(73) Patentinhaber: Leibniz-Institut für Polymerforschung Dresden e.V., 01069 Dresden (DE)
(72) Erfinder: BUTWILOWSKI, Wladimir, 01445 Radebeul (DE); SCHWARZ, Simona, 01468 Moritzburg (DE)
(74) Vertreter: Rauschenbach, Marion
(86) Internationale Anmeldenummer: PCT/EP2019/051955
(87) Internationale Veröffentlichungsnummer: WO 2019/149644

(56) Entgegenhaltungen:
- EP-A1- 3 034 555
- WO-A1-2015/084372
- WO-A1-2017/072186

## Beschreibung

Die Erfindung bezieht sich auf die Gebiete der Physik und Chemie und betrifft ein Verfahren zur Trocknung und/oder Aushärtung von Klebstoff, wie er beispielsweise in der Papierindustrie, insbesondere in der Verpackungsindustrie (Papier, Pappe und Karton), zum Einsatz kommen kann.

Der Verpackungsmarkt ist ein stetig wachsender Markt, in dem Papierprodukte eine zentrale Rolle spielen. Zunehmend erfüllen diese den Anspruch, eine ökologisch sinnvolle Alternative für Kunststoffe zu sein. Einen solchen Anspruch könnten sie künftig unterstreichen, wenn auch die im großen Umfang für Papierprodukte eingesetzten, meist unverzichtbaren Klebstoffe auch auf nachwachsenden Rohstoffen basieren würden.

Papier ist ein flächiger Werkstoff, der im Wesentlichen aus Fasern meist pflanzlicher Herkunft besteht und durch Entwässerung einer Fasersuspension auf einem Sieb gebildet wird. Das entstehende Faservlies wird verdichtet und getrocknet (Wikipedia, Stichwort Papier).

Seit der Entwicklung der Verpackungsindustrie gibt es Bestrebungen und Wünsche, Kleister in Form von wässrigen Emulsionen zu möglichst schnellem Verkleben von Papier und Karton einzusetzen. Kleisterprodukte sind in zahlreichen aus dem Stand der Technik bekannt.

Aus ökologischer, arbeitshygienischer und gesundheitlicher Sicht gibt es keine besseren Klebstoffe als Kleister. Kleister wird zum Ankleben von wasserdampfdurchlässigen Tapeten genutzt, sowie in der Buchbinderei, Wellpappenproduktion, zur Herstellung von Pappmache usw.. In diesen Anwendungsbereichen spielt die Trocknungs- und Aushärtungszeit der zu verklebenden Teile nicht die entscheidende Rolle, wie dies z.B. in der Verpackungsindustrie von großer Bedeutung ist, wo die meisten Produktionsverfahren auf einem schnellen Fließbandablauf basieren. Hier spiel die Trocknungs- und Aushärtezeit des Kleisters beim Ankleben der Teile eine entscheidende Rolle. Im Vergleich mit den modernen, in dieser Produktion eingesetzten Schmelzklebern aus Kunststoffen, welche zum Verkleben oft nur 5-6 Sekunden benötigen, haben Kleister unter ähnlichen Klebbedingungen eine Trocknungs- und Aushärtungszeit von einigen Stunden und sind damit für derartige Anwendungen nicht einsatzbar.

Kleister haben daher den Markteintritt für diese per Fließband hergestellten Produkte der Verpackungsindustrie bis heute nicht geschafft. In allen anderen Kriterien für einen Einsatz (Kosten, Ökologie, Gesundheit) wären Kleister optimal und besser geeignet als Kunststoffkleber für Papier und Karton.

Aus der DE 20 2012 011 582 U1 ist ein Verfahren zum Verkleben mittels Schmelzkleber bekannt, bei dem Baugruppen aus Holz, Kunststoff, Metall, Glas, Textilien, Pappe u.a. durch Erhitzen von elektrischem Strom in wenigen Sekunden miteinander verbunden werden. Zur Wärmeübertragung wurden thermische Wärmequellen zur Erwärmung der Kleberfläche, wie z.B. wie Induktionswärme, glühend heiße Materialien, Flammen, Flüssigkeiten, Mikrowelle angegeben.

In der DE 10 2005 044 462 A1 ist angegeben, dass beim Herstellen von Laminat das Verkleben von Fugen und das Entweichen von Weichmachern unter Einwirkung von Energie in Form von Wärmeenergie, Ultraschallenergie, Hochfrequenzenergie oder UV-Energie realisiert wird.

In der DE 693 28 350 T2 ist beschrieben, dass aus Zellulosebrei eine harte Platte ausgepresst wird, die mittels Mikrowelle ausgehärtet wird. Dabei beträgt die Trocknungszeit der Platte von 3 bis 5 Minuten bei der Mikrowellenleistung von 2 bis 5 kW pro Quadratfuß und Frequenz von 2,5 GHz.

Weiter sind aus der DE 693 00 499 T2 und der WO 99/36624 die Herstellung von Papierpolstern aus Altpapierbrei oder geprägte Papiertapete mit wasserhaltigem Leim bekannt. Auch hier kann die Trocknung der Materialien mittels Wärmeenergie, wie durch eine Mikrowelle erfolgen.

Gemäß der EP 1 073 796 B1 wird ein Kleister für ein schnelleres Ankleben von Teilen der Prägetapeten durch die Bestrahlung über Mikrowellen (Infrarot) oder andere Strahlung realisiert.

Aus der WO 2015/084372 A1 ist ein Klebstoff bekannt, der aus Wasser, Polyol - welches Stärke sein kann -, einem zweiten Compound - welches Melamin oder Harnstoff sein kann - und einem Vernetzer - der Zitronensäure sein kann - besteht.

Gemäß der WO 2017/072186 A1 ist ein wässriger vernetzbarer Klebstoff bekannt, der aus einem Kohlenhydrat-Compound und aus einem ersten und zweiten Vernetzer besteht, wobei die Vernetzer unterschiedlich voneinander sind und der zweite Vernetzer fähig ist, eine radikalische Polymerisation einzugehen.

Weiter ist aus der EP 3 034 555 A1 ein vernetzbares Harz bekannt, welches eine wässrige Dispersion ist aus den Komponenten a) bis c), wobei a) eine wasserunlösliche Naturstärke, b) ein nichtpolymeres polycarbocyclisches Compound welches z.B. das Anhydrid der Zitronensäure sein kann und c) ein Polyol, welches ein Alkylenglykol oder ein Zuckeralkohol sein kann.

Nachteilig bei den Lösungen des Standes der Technik ist, dass noch kein Verfahren zum Kleben mittels Kleister für Papierprodukte im Weitestens Sinne für den Einsatz in der schnellen Fließbandproduktion bekannt ist. Nach wie vor reichen dafür die für Kleister erforderlichen Trocknungs- und Aushärtezeiten nicht aus.

Der Erfindung liegt die Aufgabe zugrunde, ein einfaches und kostengünstiges Verfahren zur Trocknung und/oder Aushärtung eines biobasierten Klebstoffs anzugeben, das Trocknungs- und Aushärtezeiten von ≤ 20 s aufweist.

Die Aufgabe wird durch die in den Ansprüchen angegebene Erfindung gelöst. Vorteilhafte Ausgestaltungen sind Gegenstand der Unteransprüche.

Bei dem erfindungsgemäßen Verfahren zur Trocknung und/oder Aushärtung von Klebstoff auf den mit Klebstoff in Kontakt befindlichen zu klebenden Flächen wird ein Klebstoff, der im Wesentlichen mindestens 30 bis 70 Ma.-% Stärke, 1 bis 15 Ma.-% mindestens einer Dicarbonsäure und einem Gesamtwassergehalt von 70 bis 98 % enthält, der Einwirkung von elektromagnetischen Wellen mit Wellenlängen von 100 mm bis 100 cm ausgesetzt, wobei die Einwirkung der elektromagnetischen Wellen mit einer Leistung von 800 bis 1600 Watt innerhalb einer Zeit von 20 bis 5 s realisiert wird, wobei innerhalb der Leistungen und Zeiten die Einwirkzeit umso kürzer ist, je höher die Leistung ist.

Vorteilhafterweise wird ein Klebestoff, der 40 bis 60 Ma.-% Stärke, 1 bis 5 Ma.-% mindestens einer Dicarbonsäure und 70 bis 98 Ma.-% Wasser enthält, der Einwirkung der elektromagnetischen Wellen ausgesetzt.

Ebenfalls vorteilhafterweise wird dem Klebstoff Wasser, noch vorteilhafterweise Trinkwasser, destilliertes Wasser oder gereinigtes Wasser aus der Papierindustrie, zugegeben.

Weiterhin vorteilhafterweise wird die Einwirkung von elektromagnetischen Wellen mittels Mikrowellen realisiert.

Und auch vorteilhafterweise werden elektromagnetische Wellen mit einer Leistung von 880 bis 1600 W angewandt, wobei diese 10 bis 5 s einwirken.

Vorteilhaft ist es auch, wenn die Stärke und die Dicarbonsäuren vor oder während der Herstellung des Klebstoffs ohne Wasserzusatz gemischt und einer Temperaturerhöhung, vorteilhafterweise bis 200 °C und innerhalb von mindestens 30 min, unterworfen worden sind.

Mit der erfindungsgemäßen Lösung ist es erstmals möglich ein einfaches und kostengünstiges Verfahren zur Trocknung und/oder Aushärtung eines biobasierten Klebstoffs anzugeben, der Trocknungs- und Aushärtezeiten von ≤ 20 s aufweist.

Erreicht wird dies mit einem Verfahren, bei dem vorteilhafterweise ein Klebstoff aus 40 Ma.-% Kartoffelstärke und 10 Ma.-% Zitronensäure, gemischt und unter Rühren bis auf eine Temperatur von 155 °C aufgeheizt und dort 1 h gehalten und gerührt wird, und weiter aus 50 Ma.-% Wasser, das zugegeben worden ist und der Klebestoff bei einer Temperatur von 130 °C 2 Stunden gerührt und auf Raumtemperatur (20 °C) abgekühlt worden ist.

Dies wird weiter vorteilhafterweise auch erreicht durch ein Verfahren, bei dem ein Klebstoff aus 47 Ma.-% Weizenstärke oder thermoplastischer Stärke oder synthetischer Acetylstärke und 5 Ma.-% Zitronensäure und/oder Adipinsäure gemischt und unter Rühren bis auf eine Temperatur von 155 °C aufgeheizt und dort 1 h gehalten und gerührt werden, und weiter aus 48 Ma.-% Wasser, das zugegeben worden ist und der Klebstoff bei einer Temperatur von 130 °C 2 Stunden gerührt und abgekühlt worden ist.

Die im Weiteren genannten Stärken sind Kartoffelstärke, Weizenstärke, thermoplastische Stärke oder synthetische Acetylstärke.

Die im weiteren genannten Dicarbonsäuren sind Zitronensäure und/oder Adipinsäure.

Weiter ist es besonders vorteilhaft, wenn die Stärke und die Dicarbonsäuren vor der Herstellung des Klebstoffes, aber auch während des Herstellungsverfahrens des Klebstoffes insgesamt ohne Wasserzusatz gemischt und die Mischung einer Temperaturerhöhung ausgesetzt wird.

Die Temperaturerhöhung darf nur bis zu einer Temperatur geführt werden, die unter der Zersetzungstemperatur der Stärke und der Dicarbonsäuren liegt. Vorteilhafterweise wird die Mischung auf eine Temperatur von bis zu 200 °C, noch vorteilhafterweise bis 155 °C aufgeheizt. Sowohl die Aufheizphase kann bis zu 30 min betragen und/oder eine Haltezeit bei der Maximaltemperatur kann bis zu 30 min betragen.

Durch die Temperaturerhöhung der Mischung erfolgt ein "Verbacken" oder "Verschmelzen" von Stärke und Dicarbonsäuren, was sich für den weiteren Prozess der Klebstoffherstellung aber auch für die Eigenschaften des Klebstoffes als sehr vorteilhaft herausgestellt hat.

Auch durch diese Mischung und Temperaturerhöhung ohne Wasser sind nachfolgend die kurzen Trocknungs- und Aushärtezeiten beim Kleben des Klebstoffes realisierbar.

Die vorhandene Stärke ist vorteilhafterweise vor oder während der Herstellung einer Temperaturerhöhung unterworfen gewesen, und kann vorteilhafterweise als thermoplastische Stärke und/oder biologisch entstandene Stärke und/oder synthetisch hergestellte Stärke eingesetzt werden. Biologisch entstandene Stärke ist Kartoffelstärke. Sofern biologisch entstandene Stärke erfindungsgemäß eingesetzt wird, ist dies für den Klebstoff besonders vorteilhaft, da damit alle Bestandteile biologische Bestandteile sind und damit keinerlei umweltschädigende Bestandteile zum Einsatz kommen. Alle solchen biologischen Bestandteile sind selbstverständlich biologisch abbaubar und nachwachsende Rohstoffe.

Als Dicarbonsäuren können Zitronensäure oder Adipinsäure oder Mischungen davon eingesetzt werden.

Als Wasser kann vorteilhafterweise Trinkwasser aber auch destilliertes Wasser oder gereinigtes Abwasser aus der Papierindustrie eingesetzt werden.

Der mit dem erfindungsgemäßen Verfahren trockenbare und/oder aushärtbare biobasierte Klebstoff ist vor allem in der Papierindustrie vorteilhaft einsetzbar. Im Rahmen der vorliegenden Erfindung sollen die mit dem erfindungsgemäßen Verfahren trockenbaren und/oder aushärtbaren Klebstoffe in der Papierindustrie einsetzbar sein, welche ein Wirtschaftszweig ist, der zur Grundstoffindustrie gehört und sich mit der Herstellung von Papier, Karton und Pappe befasst (Wikipedia, Stichwort Papierindustrie).

Jedoch ist der Einsatz des mit dem erfindungsgemäßen Verfahren trockenbaren und/oder aushärtbaren Klebstoffs auch in anderen Industriezweigen möglich, insbesondere dort, wo eine schnelle Trocknung und/oder Aushärtung des Klebstoffes von Interesse ist.

Bei dem mit dem erfindungsgemäßen Verfahren trockenbaren und/oder aushärtbaren Klebstoff kann eine oder ein Gemisch von Dicarbonsäuren eingesetzt werden. Dies hat sich als positiv herausgestellt, da die Dicarbonsäuren als Konservierungsmittel, Modifizierungsmittel und/oder Weichmacher für die Stärke dienen.

Die Herstellung des Klebstoffes kann auf verschiedene Art und Weise erfolgen. Vorteilhaft ist es, wenn die Stärke und die Dicarbonsäuren vor oder während der Herstellung des Klebstoffs ohne Wasserzusatz gemischt und einer Temperaturerhöhung, vorteilhafterweise bis 200 °C und innerhalb von mindestens 30 min, unterworfen werden. Es ist aber auch möglich, dass der Klebstoff durch Zugabe der Stärke zu Wasser und gleichzeitiges oder anschließendes Homogenisieren, vorteilhafterweise durch Rühren oder mittels Ultraschall hergestellt wird, wobei gleichzeitig mit der Stärke oder danach die ein oder mehreren Dicarbonsäuren zugegeben und homogenisiert werden können.

Durch Temperaturerhöhung während der Homogenisierung des Klebstoffs kann die Zeit bis zur Homogenisierung deutlich verkürzt werden. Wird für eine ausreichende Homogenisierung des Klebstoffs bei Raumtemperatur eine Zeit von bis zu einigen Tagen benötigt, so werden für die Homogenisierung bei höheren Temperaturen meist nur einige wenige Stunden benötigt. Bei der Temperaturerhöhung ist darauf zu achten, dass die Temperaturen nicht bis oder über den Zersetzungstemperaturen der Bestandteile des erfindungsgemäßen Klebstoffs eingesetzt werden.

So kann die Homogenisierung von biologischer Stärke in Wasser bei Temperaturen bis zu 155 °C durchgeführt werden und für eine ausreichende Homogenisierung werden 1 bis 2 Stunden benötigt.

Nach der Herstellung des Klebstoffs liegt dieser in flüssiger bis zähflüssiger Form vor.

Der Klebstoff kann nach der Abkühlung auf Raumtemperatur sofort weiterverarbeitet und ausgehärtet werden oder auch gelagert werden.

Im Falle eines hohen Wasseranteils im Klebstoff ist der Klebstoff eine Suspension, die einfach und problemlos weiterverarbeitet werden kann.

Bei einem geringeren Wassergehalt des Klebstoffs ist dieser zähflüssiger und es kann durch Wasserzugabe eine Suspension aus Klebstoff und Wasser hergestellt werden.

Eine Suspension ist ein heterogenes Stoffgemisch aus einer Flüssigkeit und darin fein verteilten Festkörpern (Partikeln) (Wikipedia, Stichwort Suspension).

Die Suspension aus dem Klebstoff und Wasser weist einen Gesamtwassergehalt von 70 bis 98 % auf, wobei der Gesamtwassergehalt des Klebstoffes vorteilhafterweise zwischen 70 bis 94 %, noch vorteilhafterweise zwischen 90 bis 92 % beträgt.

Diese Suspension kann dann als "Kleber" in der Papierindustrie oder bei anderen Anwendungen, bei denen es auf eine schnelle Trocknung und/oder Aushärtung des Klebers ankommt, eingesetzt werden.

Der Klebstoff in Form einer Suspension wird dann mehr oder minder dünn auf eine der zu klebenden Flächen, vorteilhafterweise Papier-, Pappe- oder Kartonflächen, aufgetragen und mit der anderen zu klebenden Fläche kontaktiert. Danach werden erfindungsgemäß mindestens teilweise die Flächen, die mit dem Klebstoff in Kontakt befindlich sind, einer Einwirkung von elektromagnetischen Wellen mit Wellenlängen von 100 mm bis 100 cm ausgesetzt.

Derartige elektromagnetische Wellen können vorteilhafterweise Mikrowellen sein. Ein vorteilhafter Bereich der Wellenlängen der eingesetzten elektromagnetischen Wellen ist weiter der Bereich von 10 cm bis 100 cm.

Die Einwirkung der elektromagnetischen Wellen erfolgt dabei erfindungsgemäß mit einer Leistung von 800 bis 1600 Watt innerhalb einer Zeit von 20 bis 5 s.

Dabei ist es erfindungsgemäß von Bedeutung, dass die Einwirkzeit der elektromagnetischen Wellen auf die zu klebenden Flächen mit dem Klebstoff umso kürzer ist, je höher die Leistung der elektromagnetischen Wellen ist.

Bei vorteilhafterweise Leistungen der elektromagnetischen Wellen von 880 bis 1600 W wird für die Realisierung einer guten bis sehr guten Klebwirkung nur 10 bis 5 s benötigt. Die gute bis sehr gute Klebwirkung des Klebstoffs wird erreicht, wenn dieser möglichst vollständig getrocknet und/oder ausgehärtet ist.

Es konnten optimale Aushärtezeiten von ≤ 10 s erreicht werden.

Ebenfalls von besonderer Bedeutung für die erfindungsgemäße Lösung ist, dass erfindungsgemäß herausgefunden worden ist, dass der Gesamtwassergehalt des Klebstoffs in Form der Suspension zwischen 70 bis 98 % beträgt, wobei gerade höhere Wassergehalte bei gleicher Leistung der elektromagnetischen Wellen zur Erreichung einer guten bis sehr guten Klebwirkung führen. Besonders vorteilhaft ist ein Gesamtwassergehalt von 90 bis 94 %.

Besonders kurze Aushärtezeiten für die Erreichung der guten bis sehr guten Klebwirkung sind bei einem Gesamtwassergehalt von 92 % erreicht worden. Oberhalb eines Gesamtwassergehaltes von 94 % werden bei gleichen Leistungen der elektromagnetischen Wellen wieder längere Aushärtezeiten notwendig.

Zudem hat sich erfindungsgemäß herausgestellt, dass zur Erreichung einer maximalen Klebwirkung der Klebstoff mit einen Gesamtwassergehalt von 92 % bei allen Leistungen der elektromagnetischen Wellen im erfindungsgemäßen Bereich die jeweils kürzesten Einwirkzeiten der elektromagnetischen Wellen behandelt werden kann und innerhalb der kürzesten Trocknungs- und Aushärtezeiten von ≤ 10 bis 5 s aushärtet.

Das immer kürzere Zeiten für die Erreichung einer guten bis sehr guten Klebwirkung bei gleicher Leistung der elektromagnetischen Wellen mit zunehmenden Wassergehalt der des Klebstoffes in Form der Suspension bis zu einem Gesamtwassergehalt von 92 % erreichbar sind, und dass diese Zeiten für diese Klebwirkung bei einem steigenden Gesamtwassergehalt über 92 % wieder länger werden, war nicht zu erwarten gewesen.

Jedoch werden im gesamten Bereich der Erfindung der Trocknungs- und Aushärtezeiten von ≤ 20 s erreicht.

Die Erwärmung von Materialien und Flüssigkeiten unter Einsatz von elektromagnetischen Wellen in einer Mikrowelle ist schon seit Jahrzehnten an sich bekannt.

So werden Mikrowellen beispielsweise für die Verklebung von Holzfügeteile, Textilien, Leder oder Kunststoffen eingesetzt, wobei die Kleber native oder künstliche Schmelzekleber sind.

Der Klebstoff ist kein Schmelzekleber, da er zur Erreichung der Klebwirkung, das heißt zu ihrer Aushärtung, nicht vorher aufgeschmolzen werden muss.

Der erfindungsgemäße Einsatz von elektromagnetischen Wellen für die Trocknung und/oder Aushärtung der Klebstoffe innerhalb von solch kurzen Zeiten von ≤ 20 s ist aus Lösungen des Standes der Technik nicht bekannt.

Besonders vorteilhaft ist die erfindungsgemäße Lösung in der Papierindustrie anwendbar, da hier Papier, Pappe und Karton verarbeitet wird und sehr kurze Zeiten für die Trocknung und/oder Aushärtung des Klebstoffs innerhalb einer Fließbandproduktion realisiert werden müssen.

Ein solches Anwendungsbeispiel könnte das möglichst schnelle Verkleben von Papier und Karton für die Herstellung von Faltschachteln sein. Faltschachteln können alle wesentlichen Funktionen von Verpackungen erfüllen, insbesondere auch eine Marketingfunktion. Faltschachteln erreichen in Deutschland ein Marktvolumen von ca. 9 Milliarden EUR mit steigender Tendenz.

Daher könnte der Einsatz des erfindungsgemäßen Klebstoffs hier deutliche Vorteile bringen.

Nachfolgend wird die Erfindung an mehreren Ausführungsbeispielen näher erläutert.

### Beispiel 1

40 g Kartoffelstärke Agrana werden mit 10 g Zitronensäure gemischt und unter Rühren bis auf eine Temperatur von 155 °C aufgeheizt und dort 1 h gehalten und gerührt. Danach werden 50 g Wasser zugegeben und nochmals bei einer Temperatur von 130 °C 2 Stunden gerührt. Danach wird der Klebstoff auf Raumtemperatur (20 °C) abgekühlt.

Diese Ausgangsstoffe ergeben eine Zusammensetzung des Klebstoffs von 40 Ma.- % Stärke, 10 Ma.-% Zitronensäure und 50 Ma.-% Wasser.

Zu diesem Klebstoff werden zur Herstellung einer praktikablen Suspension unterschiedliche Mengen an Wasser zugegeben. Die dann erhaltenen Klebstoffe weisen Gesamtwassergehalte vom 72 Ma.-%, 86 Ma.-% und 92 Ma.-% auf und ergeben hellbraune Klebstoffe. Diese sind bei einer Temperatur von 100-130°C flüssig und bei Raumtemperatur von ca. 20 °C honigartig zäh.

Diese Klebstoffe werden auf Kartonunterlagen dünn aufgetragen und das zu verbindende Kartonteil auf die Klebestelle aufgebracht und sofort in der Mikrowelle bei einer Frequenz von 2,45 GHz, entsprechend einer Wellenlänge von 12,22 cm, und Leistungen von 800 und 1600 Watt eingebracht.

Bei einem Wassergehalt von 72% Ma.-% und einer Leistung von 1600 W wird eine Aushärtezeit von 15 s erreicht.

Bei einem Wassergehalt von 86 % Ma.-% und einer Leistung von 800 W beträgt die Aushärtezeit 10 s.

Bei einem Wassergehalt von 92 Ma.-% und einer Leistung von 1600 W wird eine Aushärtezeit von 5 s erreicht.

Anschließend wurde sofort geprüft, ob die Kartonstücke fest miteinander verklebt sind oder nicht. Alle Klebstoffe waren getrocknet und ausgehärtet und die Kartonstücke waren alle fest miteinander verklebt.

### Beispiel 2

10 g Weizenstärke Agrana werden mit 1 g Zitronensäure gemischt und unter Rühren bis auf eine Temperatur von 155 °C aufgeheizt und dort 1 h gehalten und gerührt. Danach werden 10 g Wasser zugegeben und nochmals bei einer Temperatur von 130 °C 2 Stunden gerührt. Dieser Klebstoff ist bei einer Temperatur von 100-130°C flüssig und bei Raumtemperatur von ca. 20 °C honigartig zäh.

Die Ausgangsstoffe ergeben eine Zusammensetzung des Klebstoffs von 47 Ma.-% Stärke, 5 Ma.-% Zitronensäure und 48 Ma.-% Wasser.

Danach wird dieser Klebstoff zur Herstellung einer praktikablen Suspension mit Wasser zur Einstellung von Gesamtwassergehalten von 72 Ma.-%, 86 Ma.-% und 92 Ma.-% verdünnt.

Diese Klebstoffe in Form von Suspensionen werden auf Kartonunterlagen dünn aufgetragen und das zu verbindende Kartonteil auf die Klebestelle aufgebracht und sofort in der Mikrowelle bei einer Frequenz von 2,45 GHz, entsprechend einer Wellenlänge von 12,22 cm, und Leistungen von 800 und 1600 Watt eingebracht.

Bei einem Wassergehalt von 72% Ma.-% und einer Leistung von 1600 W wird eine Aushärtezeit von 20 s erreicht.

Bei einem Wassergehalt von 86 % Ma.-% und einer Leistung von 800 W beträgt die Aushärtezeit 12 s.

Bei einem Wassergehalt von 92 Ma.-% und einer Leistung von 1600 W wird eine Aushärtezeit von 8 s erreicht.

Anschließend wurde sofort geprüft, ob die Kartonstücke fest miteinander verklebt sind oder nicht. Alle Klebstoffe waren getrocknet und ausgehärtet und die Kartonstücke waren alle fest miteinander verklebt.

### Beispiel 3

30 g SOLANYL C1201 als thermoplastische Stärke wird mit 1 g Adipinsäure gemischt und unter Rühren bis auf eine Temperatur von 155 °C aufgeheizt und dort 1 h gehalten und gerührt. Danach werden 10 g Wasser zugegeben und nochmals bei einer Temperatur von 130 °C 2 Stunden gerührt. Dieser Klebstoff ist bei einer Temperatur von 100-130°C flüssig und bei Raumtemperatur von ca. 20 °C honigartig zäh.

Die Ausgangsstoffe ergeben eine Zusammensetzung des Klebstoffs von 47 Ma.-% Stärke, 5 Ma.-% Adipinsäure und 48 Ma.-% Wasser.

Danach wird dieser Klebstoff zur Herstellung einer praktikablen Suspension mit Wasser zur Einstellung von Gesamtwassergehalten von 72 Ma.-%, 86 Ma.-% und 92 Ma.-% verdünnt.

Diese Klebstoffe in Form von Suspensionen werden auf Kartonunterlagen dünn aufgetragen und das zu verbindende Kartonteil auf die Klebestelle aufgebracht und sofort in der Mikrowelle bei einer Frequenz von 2,45 GHz, entsprechend einer Wellenlänge von 12,22 cm, und Leistungen von 800 und 1600 Watt eingebracht.

Bei einem Wassergehalt von 72% Ma.-% und einer Leistung von 1600 W wird eine Aushärtezeit von 20 s erreicht.

Bei einem Wassergehalt von 86 % Ma.-% und einer Leistung von 800 W beträgt die Aushärtezeit 12 s.

Bei einem Wassergehalt von 92 Ma.-% und einer Leistung von 1600 W wird eine Aushärtezeit von 8 s erreicht.

Anschließend wurde sofort geprüft, ob die Kartonstücke fest miteinander verklebt sind oder nicht. Alle Klebstoffe waren getrocknet und ausgehärtet und die Kartonstücke waren alle fest miteinander verklebt.

### Beispiel 4

20 g synthetische Acetylstärke wird mit 0,5 g Zitronensäure und 0,5 g Adipinsäure gemischt und unter Rühren bis auf eine Temperatur von 155 °C aufgeheizt und dort 1 h gehalten und gerührt. Danach werden 10 g Wasser zugegeben und nochmals bei einer Temperatur von 130 °C 2 Stunden gerührt. Dieser Klebstoff ist bei einer Temperatur von 100-130°C flüssig und bei Raumtemperatur von ca. 20 °C honigartig zäh.

Die Ausgangsstoffe ergeben eine Zusammensetzung des Klebstoffs von 47 Ma.-% Stärke, 5 Ma.-% Zitronensäure und Adipinsäure und 48 Ma.-% Wasser.

Danach wird dieser Klebstoff zur Herstellung einer praktikablen Suspension mit Wasser zur Einstellung von Gesamtwassergehalten von 72 Ma.-%, 86 Ma.-% und 92 Ma.-% verdünnt.

Diese Klebstoffe in Form von Suspensionen werden auf Kartonunterlagen dünn aufgetragen und das zu verbindende Kartonteil auf die Klebestelle aufgebracht und sofort in der Mikrowelle bei einer Frequenz von 2,45 GHz, entsprechend einer Wellenlänge von 12,22 cm, und Leistungen von 800 und 1600 Watt eingebracht.

Bei einem Wassergehalt von 72% Ma.-% und einer Leistung von 1600 W wird eine Aushärtezeit von 20 s erreicht.

Bei einem Wassergehalt von 86 % Ma.-% und einer Leistung von 800 W beträgt die Aushärtezeit 12 s.

Bei einem Wassergehalt von 92 Ma.-% und einer Leistung von 1600 W wird eine Aushärtezeit von 8 s erreicht.

Anschließend wurde sofort geprüft, ob die Kartonstücke fest miteinander verklebt sind oder nicht. Alle Klebstoffe waren getrocknet und ausgehärtet und die Kartonstücke waren alle fest miteinander verklebt.

## Patentansprüche

1. Verfahren zur Trocknung und/oder Aushärtung von Klebstoff auf den mit Klebstoff in Kontakt befindlichen zu klebenden Flächen, bei dem ein Klebstoff, der im Wesentlichen mindestens 30 bis 70 Ma.-% Stärke, 1 bis 15 Ma.-% mindestens einer Dicarbonsäure und einem Gesamtwassergehalt von 70 bis 98 % enthält, der Einwirkung von elektromagnetischen Wellen mit Wellenlängen von 100 mm bis 100 cm ausgesetzt wird, wobei die Einwirkung der elektromagnetischen Wellen mit einer Leistung von 800 bis 1600 Watt innerhalb einer Zeit von 20 bis 5 s realisiert wird, und wobei innerhalb der Leistungen und Zeiten die Einwirkzeit umso kürzer ist, je höher die Leistung ist.

2. Verfahren nach Anspruch 1, bei dem ein Klebstoff, der 40 bis 60 Ma.-% Stärke, 1 bis 5 Ma.-% mindestens einer Dicarbonsäure und 70 bis 98 Ma.-% Wasser enthält, der Einwirkung der elektromagnetischen Wellen ausgesetzt wird.

3. Verfahren nach Anspruch 1, bei dem dem Klebstoff Wasser, vorteilhafterweise Trinkwasser, destilliertes Wasser oder gereinigtes Wasser aus der Papierindustrie zugegeben wird.

4. Verfahren nach Anspruch 1, bei dem die Einwirkung von elektromagnetischen Wellen mittels Mikrowellen realisiert wird.

5. Verfahren nach Anspruch 1, bei dem elektromagnetische Wellen mit einer Leistung von 880 bis 1600 W angewandt werden, wobei diese 10 bis 5 s einwirken.

6. Verfahren nach Anspruch 1, bei dem die Stärke und die Dicarbonsäuren vor oder während der Herstellung des Klebstoffs ohne Wasserzusatz gemischt und einer Temperaturerhöhung, vorteilhafterweise bis 200 °C und innerhalb von mindestens 30 min, unterworfen worden sind.

## Claims

1. Method for drying and/or curing adhesive on the surfaces to be bonded that are in contact with the adhesive, wherein an adhesive substantially containing at least 30% to 70% by mass of starch, 1% to 15% by mass of at least one dicarboxylic acid and a total water content of 70% to 98% is exposed to the activity of electromagnetic waves having wavelengths from 100 mm to 100 cm, where the activity of the electromagnetic waves is realized with a power of 800 to 1600 watts within a time of 20 to 5 s, and where within the powers and times, the higher the power, the shorter the activity time.

2. Method according to Claim 1, wherein an adhesive containing 40% to 60% by mass of starch, 1% to 5% by mass of at least one dicarboxylic acid and 70% to 98% by mass of water is exposed to the activity of the electromagnetic waves.

3. Method according to Claim 1, wherein water, advantageously drinking water, distilled water or purified water from the paper industry is added to the adhesive.

4. Method according to Claim 1, wherein the activity of electromagnetic waves is realized by means of microwaves.

5. Method according to Claim 1, wherein electromagnetic waves with a power of 880 to 1600 W are employed and they act for 10 to 5 s.

6. Method according to Claim 1, wherein the starch and the dicarboxylic acids before or during the production of the adhesive have been mixed without addition of water and subjected to a temperature increase, advantageously up to 200°C and within at least 30 min.

## Revendications

1. Procédé de séchage et/ou de durcissement d'adhésif sur les surfaces à coller se trouvant en contact avec l'adhésif, dans lequel un adhésif, qui contient essentiellement au moins 30 à 70% en masse d'amidon, 1 à 15% en masse d'au moins un acide dicarboxylique et une teneur totale en eau de 70 à 98%, est soumis à l'action d'ondes électromagnétiques présentant des longueurs d'onde de 100 mm à 100 cm, l'action des ondes électromagnétiques étant réalisée à une puissance de 800 à 1600 watts en un temps de 20 à 5 s, et au sein des puissances et des temps, le temps d'action étant d'autant plus court que la puissance est élevée.

2. Procédé selon la revendication 1, dans lequel un adhésif qui contient 40 à 60% en masse d'amidon, 1 à 5% en masse d'au moins un acide dicarboxylique et 70 à 98% en masse d'eau, est soumis à l'action des ondes électromagnétiques.

3. Procédé selon la revendication 1, dans lequel l'adhésif est additionné d'eau, avantageusement d'eau potable, d'eau distillée ou d'eau purifiée provenant de l'industrie du papier.

4. Procédé selon la revendication 1, dans lequel l'action d'ondes électromagnétiques est réalisée au moyen de micro-ondes.

5. Procédé selon la revendication 1, dans lequel des ondes électromagnétiques d'une puissance de 880 à 1600 W sont utilisées, celles-ci agissant pendant 10 à 5 s.

6. Procédé selon la revendication 1, dans lequel l'amidon et les acides dicarboxyliques sont mélangés avant ou pendant la préparation de l'additif sans ajout d'eau et sont soumis à une augmentation de la température, avantageusement jusqu'à 200°C et pendant au moins 30 minutes.
